# EUROPEAN PATENT APPLICATION

(11) **EP 2 594 748 A1**
(43) Date of publication of application: **22.05.2013**
(21) Application number: 11189937.3
(22) Date of filing: 21.11.2011
(51) Int. Cl.: F01D 15/10, F02C 6/16

(54) **Energy storage and recovery system comprising a thermal storage and a pressure storage**

(71) Applicant: Siemens Aktiengesellschaft, 80333 München (DE)
(72) Inventor: Laurberg, Hans, 8000 Århus C (DK)

(57) **Abstract**

It is described an energy storage and recovery system (100, 200), which comprises (a) a thermal energy storage and recovery device (110) having a container (112), a heat storage material being accommodated within the container (112), a first fluid terminal (116) and a second fluid terminal (117), wherein a heat transfer fluid is guidable between the first fluid terminal (116) and the second fluid terminal (117) whereby a heat transfer between the heat transfer fluid and the heat storage material occurs, (b) a first fluid energy machine (160, 260) being connected with the first fluid terminal (116), (c) a pressure affecting device (170, 270) being connected with the second fluid terminal (117), and (d) a pressure storage vessel (140) being connected both with the second fluid terminal (117) and with the pressure affecting device (170, 270). Further described is a method for storing energy with such an energy storage and recovery system (100) and a corresponding method for recovering energy from such a thermal energy storage and recovery system (200).

## Description

### Field of invention

The present invention relates to the field of temporarily storing and recovering thermal energy. In particular, the present invention relates to an energy storage and recovery system which in a first operational mode is configured for being charged with energy and which in a second operational mode is configured for being discharged from energy. Further, the present invention relates to a corresponding method for storing energy with such an energy storage and recovery system and to a corresponding method for recovering energy from such a thermal energy storage and recovery system.

### Art Background

The production of electric power from various types of alternative energy sources such as for instance wind turbines, solar power plants and wave energy plants is not continuous. The production may be dependent on environmental parameters such as for instance wind speed (for wind turbines), sunshine intensity (for solar power plant) and wave height and wave direction (for wave energy plants). There is very often little or no correlation between the energy production and the energy demand.

One known approach to solve the problem of uncorrelated electric power production and electric power demand is to temporally store energy, which has been produced but which has not been demanded, and to release the stored energy at times at which there is a high demand. In the past there have been suggested many different methods to temporarily store energy. Suggested methods are for instance (a) mechanical energy storage methods e.g. pumped hydro storage, compressed air storage and flywheels, (b) chemical energy storage methods e.g. electrochemical batteries and organic molecular storage, (c) magnetic energy storage, and (d) thermal energy storage e.g. within water or molten salts.

The document WO 2005108758 A1 discloses an air compression heat accumulating power plant with an underground heat accumulator formed in the aquifer. During operation, an available extra electric energy is converted by means of an electrically driven compressor into the air compression heat and pressure energies being accumulated in the underground heat accumulator. By means of an air turbine and a turbo generator the stored pressure energies can be converted back, if necessary, into electric energy. The underground heat accumulator can be created on a collector strata foundation, 150-700 m deep. However, the operation of the disclosed air compression heat accumulating power plant relies on available underground cavern which are not available at most locations where storage is needed.

The document US 2010/0301614 A1 discloses an installation for storing and returning electrical energy. The disclosed installation comprises a first enclosure and a second enclosure each containing a gas and porous refractory materials suitable for transferring heat by contact between said porous refractory materials and a gas flowing through the respective enclosure. In the disclosed installation the energy is stored in a hot thermal storage and in a cold thermal storage without using a highly compressed heat transfer medium. For operation, the disclosed arrangement requires a cold and hot storage of similar size. Whereas the disclosed installation is suitable for a long term energy storage the efficiency for a comparatively short term energy storage is not very good.

There may be a need for proving a thermal energy storage and recovery which is suitable both for short term and long term energy storage and which is not relying on available underground caverns.

### Summary of the Invention

This need may be met by the subject matter according to the independent claims. Advantageous embodiments of the present invention are described by the dependent claims.

According to a first aspect of the invention there is provided an energy storage and recovery system comprising (a) a thermal energy storage and recovery device having a container, a heat storage material being accommodated within the container, a first fluid terminal and a second fluid terminal, wherein a heat transfer fluid is guidable between the first fluid terminal and the second fluid terminal whereby a heat transfer between the heat transfer fluid and the heat storage material occurs, (b) a first fluid energy machine being connected with the first fluid terminal, (c) a pressure affecting device being connected with the second fluid terminal, and (d) a pressure storage vessel being connected both with the second fluid terminal and with the pressure affecting device . The first fluid energy machine and the pressure affecting device are configured such that in a first operational mode the first fluid energy machine generates thermal energy being transferred via the heat transfer fluid at least partially to the heat storage material. Further, in a second operational mode the first fluid energy machine receives via the heat transfer fluid thermal energy from the heat storage material.

The described energy storage and recovery system is based on the idea that by providing a combination of (a) the thermal energy storage and recovery device and (b) the pressure storage vessel an efficient temporal (thermal) energy storage can be realized both for a short term energy storage and a long term energy storage.

In this document the term "short term energy storage" may mean that the time difference between (a) the begin of a first time period during which the thermal energy storage and recovery device is charged with thermal energy and (b) the begin of a second time period during which the thermal energy storage and recovery device is discharged is up to a few hours (e.g. 3 hours), is up to one hour or is up to several minutes (e.g. 30 minutes). Correspondingly, the term "long term energy storage" may mean that this time difference is longer than one of the above given values.

In order to operate the energy storage and recovery system with fast thermal cycles which correspond to short term energy storages predominantly the pressure storage vessel is used for providing a flow of heat transfer fluid for the thermal energy storage and recovery device. By contrast thereto, when operating the energy storage and recovery system with slow thermal cycles which correspond to long term energy storages predominantly the flow of heat transfer fluid for the thermal energy storage and recovery device is predominately produced by the pressure affecting device.

In this document the term "fluid energy machine" may be used for any thermodynamic arrangement, which is capable of exchanging mechanical work or mechanical energy with a working fluid. Here the working fluid may be the heat transfer fluid which is guided between the two fluid terminals through the container of the thermal energy storage and recovery device.

The term "pressure affecting device" may be any mechanism being capable of maintaining and/or generating a pressure difference between two different fluid ports. The pressure affecting device may be e.g. a throttle which can be realized by a constriction or by an obstruction which spatially restricts a flow of heat transfer fluid. In the context of the energy storage and recovery system described here the pressure affecting device may ensure that the heat transfer fluid being guided through the thermal energy storage and recovery device has a certain pressure, which preferably is significantly larger than an ambient pressure.

According to an embodiment of the invention the energy storage and recovery system further comprises a fluid distribution device being connected with the second fluid terminal, the pressure storage vessel and the pressure affecting device. The described fluid distribution device is configured for controlling the strengths of (a) a first flow of heat transfer fluid between the second fluid terminal and the fluid distribution device, (b) a second flow of heat transfer fluid between the pressure storage vessel and the fluid distribution device, and (c) a third flow of heat transfer fluid between the pressure affecting device and the fluid distribution device.

The operation of the fluid distribution device may be controlled by appropriate control means, such that depending on the current operational conditions the various fluid flows are freely adjustable. Preferably there is no loss and also no further injection of heat transfer fluid in this region of the fluid distribution device. This means that when the direction of the heat transfer fluid flow towards or away from the fluid distribution device is taken into account by an appropriate mathematical sign (+ or -) the sum of the three flows of heat transfer fluid is zero.

The fluid distribution device may be realized e.g. by a three-way valve, wherein the position of the three-way valve can be controlled by an appropriate actuator. Of course, also a combination of e.g. two two-way valves may be employed.

According to a further embodiment of the invention (a) in the first operational mode the fluid distribution device is configured for distributing a flow of heat transfer fluid being received from the second fluid terminal into a first partial flow of heat transfer fluid to the pressure affecting device and a second partial flow of heat transfer fluid to the pressure storage vessel and (b) in the second operational mode the fluid distribution device is configured for distributing a further flow of heat transfer fluid being received from the pressure affecting device into a further first partial flow of heat transfer fluid to the second fluid terminal and a further second flow partial flow of heat transfer fluid to the pressure storage vessel.

Generally speaking, the first operational mode may be subdivided into two first operational submodes. In a first first operational submode the fluid distribution device fluidly decouples the pressure storage vessel from the other components of the energy storage and recovery system. This means that all the heat transfer fluid leaving the second fluid terminal is directed exclusively to the pressure affecting device. As has already been mentioned above this is suitable in particular for comparatively long term energy storages. By contrast thereto, in a second first operational submode the fluid distribution device fluidly decouples the pressure affecting device from the second fluid terminal. This means that all the heat transfer fluid leaving the second fluid terminal is directed exclusively to the pressure storage device. As has already been mentioned above this is suitable in particular for comparatively short term energy storages.

In this respect it is mentioned that the energy storage and recovery system can also be operated in a hybrid first operational mode wherein the heat transfer fluid leaving the second fluid terminal is partially directed to the pressure affecting device and partially to the pressure storage vessel.

Correspondingly, also the second operational mode may be subdivided into two second operational submodes. In a first second operational submode the fluid distribution device fluidly again decouples the pressure storage vessel from the other components of the energy storage and recovery system. This means that all the heat transfer fluid being received by the second fluid terminal is provided exclusively by the pressure affecting device. As has already been mentioned above this is suitable in particular for comparatively long term energy recoveries. By contrast thereto, in a second second operational submode the fluid distribution device again fluidly decouples the pressure affecting device from the second fluid terminal. This means that all the heat transfer fluid being received by the second fluid terminal is exclusively provided by the pressure storage vessel. As has already been mentioned above this is suitable in particular for comparatively short term energy recoveries.

Also in this respect it is mentioned that the energy storage and recovery system can also be operated in a hybrid second operational mode wherein the heat transfer fluid reaching the second fluid terminal is provided both by the pressure affecting device and the pressure storage vessel.

Descriptive speaking, for a short term energy storage and recovery cycle having a duration of e.g. less than 24 hours the pressure storage vessel, which represents an expensive but highly efficient energy storage, may be employed as the main energy storage. For longer energy storage and recovery cycles (e.g. longer than one day) the less expensive but also less effective thermal energy storage and recovery device may be employed as the main energy storage.
According to a further embodiment of the invention the pressure affecting device is a second fluid energy machine, wherein (a) in the first operational mode the second fluid energy machine receives via the heat transfer fluid thermal energy from the heat storage material, wherein the thermal energy generated by the first fluid energy machine is larger than the thermal energy received by the second fluid energy machine, and/or (b) in the second operational mode the second fluid energy machine receives mechanical energy and the first fluid energy machine generates mechanical energy, wherein the received mechanical energy is smaller than the generated mechanical energy. This may provide the advantage that the efficiency of the described energy storage and recovery system can be increased.

According to an embodiment of the invention (a) in the first operational mode the first fluid energy machine is configured to act as a compressor and the second fluid energy machine is configured to act as an expander and/or (b) in the second operational mode the first fluid energy machine is configured to act as an expander and the second fluid energy machine is configured to act as a compressor.

When acting as a compressor the respective fluid energy machine may be configured for an adiabatic compression of the heat transfer fluid in order to efficiently compress the heat transfer fluid before it is forwarded (a) to the thermal energy storage and recovery device and/or to the pressure storage vessel (in the first operational mode) or (b) to any further thermodynamic component or to the exterior of the described energy storage and recovery system. Correspondingly, when acting as an expander the respective fluid energy machine may be configured for an adiabatic expansion of the heat transfer fluid.

According to a further embodiment of the invention (a) the first fluid energy machine comprises a first compressor machine and a first expander machine, wherein in the first operational mode the first compressor machine is activated and the first expander machine is deactivated and in the second operational mode the first compressor machine is deactivated and the first expander machine is activated and/or (b) the second fluid energy machine comprises a second expander machine and a second compressor machine, wherein in the first operational mode the second expander machine is activated and the second compressor machine is deactivated and in the second operational mode the second expander machine is deactivated and the second compressor machine is activated. This may provide the advantage that each of the two fluid energy machines comprise two machines, wherein these two machines can be designed in such a manner that for each operational mode a maximum benefit can be taken from on optimal configured compressor respectively expander machines.

According to a further embodiment of the invention (a) a flow direction of heat transfer fluid through the first fluid energy machine in the second operational mode is opposite to the flow direction of heat transfer fluid through the first fluid energy machine in the first operational mode and/or (b) a flow direction of heat transfer fluid through the second fluid energy machine in the second operational mode is opposite to the flow direction of heat transfer fluid through the second fluid energy machine in the first operational mode. This may provide the advantage that respectively one and the same fluid energy machine can be used for both operational states. This may mean that depending on the flow direction one and the same fluid energy machine acts either as a compressor or as an expander respectively as a turbine.

The flow direction may be reversed by means of appropriate branching and/or merging pipes, through which the heat transfer fluid is guided. Thereby, controllable valves may be used for appropriately guiding the heat transfer fluid to the correct end of the respective fluid energy machine.

According to a further embodiment of the invention the entirety of the first fluid energy machine and the second fluid energy machine comprises a compressor and an expander. Thereby, in the first operational mode (a) a fluid outlet of the compressor is connected with the first fluid terminal and (b) both the second fluid terminal and the pressure storage vessel are connected with a fluid inlet of the expander. Further, in the second operational mode (a) the first fluid terminal is connected with the fluid inlet of the expander and (b) the fluid outlet of the compressor is connected with both the second fluid terminal and the pressure storage vessel. This may provide the advantage that the two fluid energy machines can be realized exclusively with a compressor and an expander (or turbine). Thereby, depending on the operational mode either the fluid outlet of the compressor or the fluid inlet of the expander is fluidly connected with the first fluid terminal of the container of the thermal energy storage and recovery device. Correspondingly, either the fluid inlet of the expander or the fluid outlet of the expander is fluidly connected with the second fluid terminal respectively with the pressure storage vessel.

In other words, depending on the operational mode either the compressor or the expander is assigned to or associated with the first fluid energy machine and either the expander or the compressor is assigned to or associated with the second fluid energy machine. Specifically, fluid pipes of the described energy storage and recovery system are designed such that in the first operational mode the compressor is assigned to or associated with the first fluid energy machine and the expander is assigned to or associated with the second fluid energy machine. Correspondingly, in the second operational mode the expander or the turbine is assigned to or associated with the first fluid energy machine and the compressor is assigned to or associated with the second fluid energy machine. Thereby, a change of the operational mode may include a closing respectively an opening of at least two fluid valves which ensure that the flow of heat transfer fluid is guided through a corresponding pipe system in such a manner that the above described limitations regarding the various fluid connections are fulfilled.

In this respect it is mentioned that the energy storage and recovery system may further comprise a mechanical energy transmission arrangement, which is connected between the first fluid energy machine and the second fluid energy machine, wherein the mechanical energy transmission arrangement is configured for directly exchanging mechanical energy between the first fluid energy machine and the second fluid energy machine. This may provide the advantage that a highly efficient energy storage and recovery process may be realized because mechanical energy being generated at one of the two fluid energy machines can be directly transferred, i.e. without any (inefficient) energy conversion processes, to the other one of the two fluid energy machines.

Specifically, in the first operational mode after having fed hot compressed heat transfer fluid (e.g. air) via the first fluid terminal into the container a at least partially cooled down compressed heat transfer fluid may be returned at the second fluid terminal. Thereby, the energy and in particular the mechanical energy being left in the returned and cooled down compressed heat transfer fluid and, if applicable also mechanical energy being comprised in (gaseous) heat transfer fluid being stored (under pressure) within the pressure storage vessel, can be extracted with the second fluid energy machine acting as an expander and can be used to help driving the first fluid energy machine acting as a compressor for the heat transfer medium being compressed and then being fed to the container via the first fluid terminal.

Correspondingly, in the second operational mode the first fluid energy machine acting as an expander or turbine is driven by heated up compressed heat transfer fluid (e.g. air), which is fed from the container via the first fluid terminal to the first fluid energy machine. Thereby, not all the mechanic energy being generated by the expander/turbine is used for external purposes. Rather a portion of the generated mechanic energy is directly (i.e. without any inefficient energy conversion) transferred to the second fluid energy machine acting as a compressor. This transferred mechanical energy can then be used to help driving the compressor for the heat transfer fluid which is supposed to be fed via the second fluid terminal to the container in order to be heated up before again leaving the container via the first fluid terminal.

The mechanical energy transmission arrangement may be realized e.g. by means of a rotatable shaft, which connects the two fluid energy machines with each other.

According to a further embodiment of the invention the energy storage and recovery system further comprises a cold storage device having a first fluid port for inserting heat transfer fluid into the cold storage device and a second fluid port for extracting heat transfer fluid from the cold storage device, wherein the first fluid port is connected with the pressure affecting device and the second fluid port is connected with the first fluid energy machine. This may provide the advantage that a thermodynamic efficiency for temporarily storing thermal energy can take benefit not only from a high temperature within the thermal energy storage and recovery device but also from a low temperature within the cold storage device. In other words, the temperature difference between the thermal energy storage and recovery device and the cold storage device can be high such that in accordance with known thermodynamic principles the thermodynamic efficiency for a temporal heat storage and heat recovery can be increased.

It is mentioned that also when using the described cold storage device it is very easy to switch between the first operational mode and the second operational mode. This only requires only to reverse the flow direction of the heat transfer fluid. Of course, in this case the first fluid port must also be configured for extracting heat transfer fluid from the cold storage device and the second fluid port must also be configured for inserting heat transfer fluid into the cold storage device.

According to a further embodiment of the invention in the first operational mode the pressure affecting device is configured for producing cold when expanding the heat transfer fluid, wherein the produced cold is useable for cooling purposes.

The cooling purposes may be for instance the operation of a condenser, a cold storage and/or a district cooling system. Preferably, expanding the working fluid is carried out under at least approximately adiabatic conditions which makes the described production of cold very effective.

According to a further embodiment of the invention the heat storage material comprises rock material and/or sand material. This may provide the advantage that a low cost and widely available material can be used for building up the thermal energy storage device. Thereby, local labor and locally available heat storage material can be used such that there is no need to transport a suitable heat storage material over a long distance. This may be in particular advantageous if a thermal energy storage device with a high heat storage capability is built up.

It is mentioned that in many applications rocks may be preferred since rocks are inexpensive and act both as heat transfer surface and as a heat storage material. This means that no special heat transfer equipment is needed within in the container of the thermal energy storage device. Due to a very large heat transfer area the amount of heat transfer between heat transfer fluid, which may be e.g. air, and the rocks can be quite high. Further, the heat conductance between the rocks is relatively low due to the small area of contact between different rocks. As a consequence the heat loss from the thermal energy storage device is relatively low and the temperature gradient within the container of the thermal energy storage device can be kept steep.

However, the described thermal energy storage and recovery system makes it also possible to use sand as heat storage material. Again, it is not necessary to use pipes for guiding the heat transfer fluid through the interior of the container. Sand may be spatially supported by profiles which generate channels for guiding the heat transfer fluid, which may be again air, through the interior of the container. The profiles may be metal plates, e.g. made from aluminum, steel or any other stable material, which is capable of withstanding high temperatures and/or spatial and/or temporal temperature changes. The profiles may be profiles known from the building industry.

In this respect it is mentioned that generally a heat storage material having a high heat capacity in the container of the thermal energy storage device is preferred in order to keep the size and the price of the thermal energy storage device at a realistic level. With the described thermal energy storage and recovery system it is possible in an advantageous manner to avoid heat storage material having a high heat capacity like chamotte, magnesia, dolomite, mullite etc. which are typically not available at every location and which are often rather costly.

According to a further embodiment of the invention the heat transfer fluid is a gas, in particular air. This may provide the advantage that the heat transfer fluid comprises a large compressibility. This has the effect that the mechanical energy storage (of the compressed gas) in the pressure storage vessel will be very effective.

In this respect it is mentioned that the heat transfer fluid may also undergo a change of its state of aggregation. This may in particular take place within the pressure storage vessel, wherein the heat transfer fluid may exist at least partially in its liquid phase. Thereby, the vapor pressure of the liquid heat transfer fluid may be used in order to at least contribute to drive the second fluid energy machine (here an expander) .

According to a further embodiment of the invention the energy storage and recovery system further comprises (a) an electric motor for driving the first fluid energy machine in the first operational mode, when the first fluid energy machine is used for receiving mechanical energy in order to compress the heat transfer fluid, and/or (b) an electric generator for extracting mechanical energy from the first fluid energy machine in the second operational mode, wherein the first fluid energy machine is driven by heat transfer fluid, which expands during the passage through the first fluid energy machine. This may provide the advantage a surplus of electric energy, which has been generated e.g. by means of a wind turbine during a time wherein the electric energy demand is smaller than the electric energy consumption, can be directly used for charging the described energy storage and recovery system with thermal energy. Correspondingly, when discharging the previously stored thermal energy from the thermal energy storage and recovery device and/or the previously stored mechanic energy from the pressure storage vessel electric energy will be again generated. Therefore, the described energy storage and recovery system can be connected to any arbitrary point of a utility grid in order to perform the above described efficient temporal energy storage.

According to a further aspect of the invention there is provided a method for storing energy within an energy storage and recovery system as described above. The provided method comprises (a) compressing a heat transfer fluid by the first fluid energy machine such that the heat transfer fluid is heated up, (b) transferring the compressed and heated up heat transfer fluid from the first fluid energy machine to the thermal energy storage and recovery device, (c) guiding the transferred compressed and heated up heat transfer fluid through the thermal energy storage and recovery device whereby thermal energy is transferred from the heat transfer fluid to the heat storage material such that the heat transfer fluid is cooled down, (d) transferring from the thermal energy storage and recovery device a first part of the cooled down heat transfer fluid to the pressure affecting device and a second part of the cooled down heat transfer fluid to the pressure storage vessel, and (e) if the first part is larger than zero, expanding heat transfer fluid, which has been transferred to the pressure affecting device , by the pressure affecting device .

The described method for storing thermal energy is based on the idea that the above described energy storage and recovery system can be used for a thermodynamic energy storage process having an extraordinary high thermodynamic efficiency factor.

According to a further aspect of the invention there is provided a method for recovering energy from an energy storage and recovery system as described above. The provided method comprises (a) compressing a heat transfer fluid by the pressure affecting device , (b) transferring from the pressure affecting device the compressed heat transfer fluid to the thermal energy storage and recovery device, (c) transferring from the pressure storage vessel additional compressed heat transfer fluid to the thermal energy storage and recovery device, (d) guiding the transferred compressed heat transfer fluid as well as the additional compressed heat transfer fluid through the thermal energy storage and recovery device whereby thermal energy is transferred from the heat storage material to the heat transfer fluid such that the heat transfer fluid is heated up, (e) transferring the heated up heat transfer fluid from the thermal energy storage and recovery device to the first fluid energy machine, and (f) expanding the transferred heated up heat transfer medium by the first fluid energy machine such that mechanical energy is generated and the heat transfer medium is cooled down.

Also the described method for recovering energy is based on the idea that the above described energy storage and recovery system can be used for a thermodynamic energy recovery process having an extraordinary high thermodynamic efficiency factor.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

Figure 1 shows in accordance with an embodiment of the invention an energy storage and recovery system in a first operational mode, wherein thermal energy is stored in a thermal energy storage and recovery device and mechanic energy is stored in a pressure storage vessel.

Figure 2 shows in accordance with an embodiment of the invention an energy storage and recovery system in a second operational mode, wherein thermal energy is recovered from a thermal energy storage and recovery device and mechanic energy is recovered from a pressure storage vessel.

### Detailed Description

The illustration in the drawing is schematically. It is noted that in different figures, similar or identical elements are provided with the same reference signs or with reference signs, which are different from the corresponding reference signs only within the first digit.

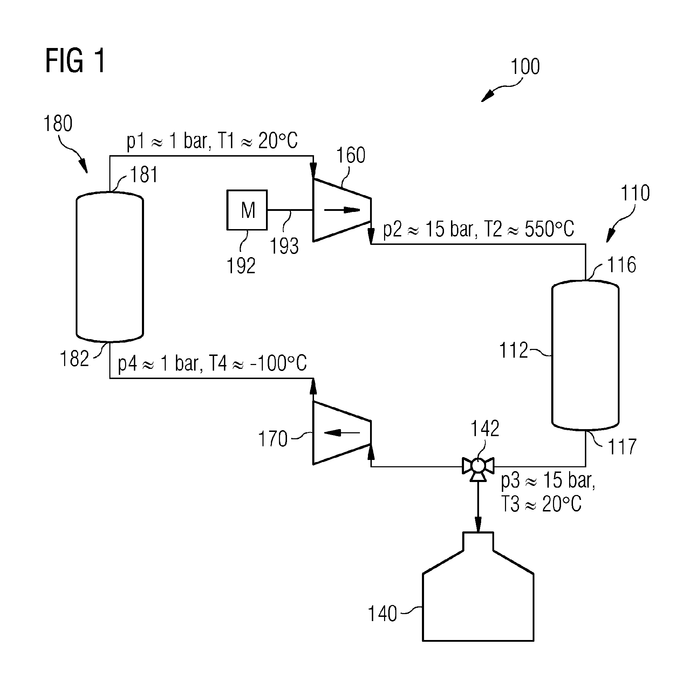

Figure 1 shows in accordance with an embodiment of the invention an energy storage and recovery system 100 in a first operational mode, wherein thermal energy is stored in a thermal energy storage and recovery device 110 and mechanic energy is stored in a pressure storage vessel 140.

The energy storage and recovery system 100 comprises a first fluid energy machine 160, which comprises a compressor and a turbine. In the first operational mode the first fluid energy machine 160 acts as a compressor 160. For the sake of clarity the turbine is not illustrated in Figure 1.

The compressor 160 is driven by an electric motor 192, which is connected with a rotor of the compressor via a rotational shaft 193. For its operation the electric motor 192 uses a surplus of electric energy, which during the time of a low demand for electricity has been generated by a power generation system, e.g. a wind turbine (not depicted). In the illustrated first operational mode the compressor 160 compresses preferably in an adiabatic manner a heat transfer fluid, here air, such that not only the pressure but also the temperature of the heat transfer fluid is increased. According to the embodiment described here for the compressor the input pressure p1 of the heat transfer fluid is approximately 1 bar and the input temperature T1 of the heat transfer fluid is approximately 20°C. Further, the output pressure p2 of the heat transfer fluid is approximately 15 bar and the output temperature T2 of the heat transfer fluid is approximately 550°C.

As can be seen from Figure 1, the compressed and heated up heat transfer fluid is transferred to the thermal energy storage and recovery device 110. Specifically, the compressed and heated up heat transfer fluid is transferred to a first fluid terminal 116 of a container 112 of the thermal energy storage and recovery device 110. The container 112 is filled with a heat storage material (not depicted), which according to the embodiment described here comprises sand and/or rocks. The compressed and heated up heat transfer fluid is guided through the container 112 such that a thermal interaction between (a) the compressed and heated up heat transfer fluid and (b) the heat storage material takes place. Thereby, thermal energy is transferred from the heat transfer fluid to the heat storage material which in response thereto is heated up.

The at least partially cooled down compressed heat transfer fluid leaves the container 112 via a second fluid terminal 117. According to the embodiment described here the heat transfer fluid leaving the container 112 has pressure p3 of still approximately 15 bar and a temperature T3 of approximately 20°C.

At a three-way valve 142 the still compressed heat transfer fluid is split into two parts. A first part is transferred to a second fluid energy machine 170, which comprises an expander and a compressor. In the first operational mode the second fluid energy machine 170 acts as an expander 170. For the sake of clarity the compressor of the second fluid energy machine 170 is not illustrated in Figure 1. The second part of the still compressed heat transfer fluid is transferred to the pressure storage vessel 140. As a consequence, the mechanical energy being comprised in the pressurized heat transfer fluid which has left the container is stored in the pressure storage vessel 140.

As can be further seen from Figure 1, the first part of the heat transfer fluid, which has been transferred to the expander 170 and which is still characterized approximately by the pressure p3 ≈ 15 bar and the temperature T3 ≈ 20°C, is expanded by the expander 170. Thereby, according to the embodiment described here the outlet pressure p4 is approximately 1 bar and the outlet temperature T4 of the expanded heat transfer fluid is approximately -100°C.

The energy storage and recovery system 100 further comprises a cold storage device 180 which receives the expanded and cooled down heat transfer fluid via a first fluid port. Within the cold storage device 180, which also comprises a heat storage material or better a cold storage material, the heat transfer fluid receives thermal energy and leaves the cold storage device 180 via a second fluid port 182. As can be seen from Figure 1, the heat transfer fluid is then guided to the above described compressor 160 such that the heat transfer fluid cycle is closed.

It is mentioned that the expander 170 and the compressor 160 may be mechanically connected to each other via a rotational mechanical shaft such that a turbo-set arrangement is provided which increased the overall efficiency of the energy storage and recovery system 100.

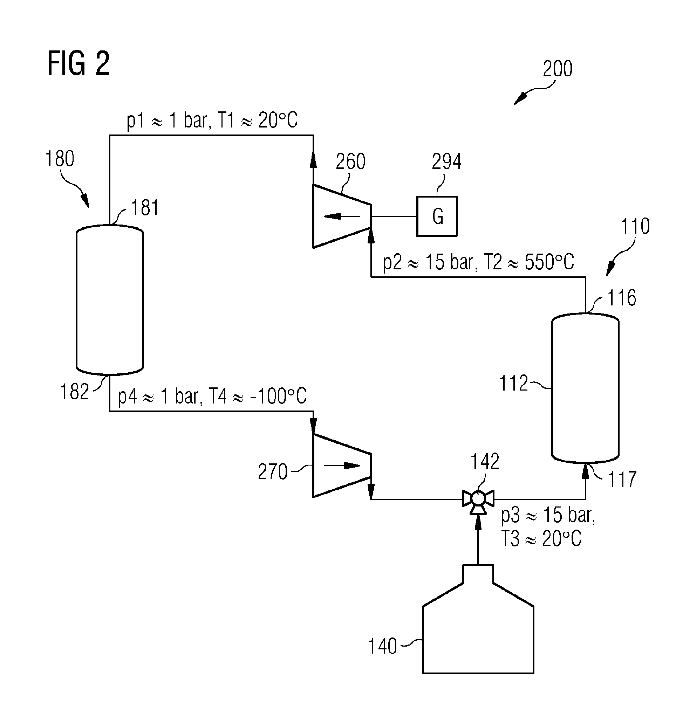

Figure 2 shows in accordance with an embodiment of the invention a energy storage and recovery system 200 in a second operational mode, wherein thermal energy is recovered from a thermal energy storage and recovery device 110 and mechanic energy is recovered from a pressure storage vessel 140.

As can be seen from Figure 2, the system 200 differs from the system 100 shown in Figure 1 in that the first fluid energy machine 260 acts as a turbine and the second fluid energy machine 270 acts as a compressor. Further, an electric generator 294 is mechanically connected via a rotational shaft 295 to the rotor of the turbine 270.

As can be further seen from Figure 2, compared to the operational mode shown in Figure 1, the flow direction of the heat transfer fluid is reversed. The pressure energy that is stored in the pressure storage vessel 140 is guided to the thermal energy storage and recovery device 100 where it is heated up from 20°C to around 550°C in such a way that the gaseous heat transfer fluid leaves the thermal energy storage and recovery device 110 at around 15 bar and 550°C. The heated up compressed heat transfer fluid is then guided through the expander 170 for generating rotational energy that is used to run the electric generator 294 for the production of electricity.

Furthermore, energy is recovered by using the cold in the cold storage device 180 by guiding gaseous heat transfer fluid at ambient temperature through the cold storage device 180 in such a way that the gaseous heat transfer fluid leaves the cold storage device at approximately -100°C. The cooled gaseous heat transfer fluid is then compressed to around 15 bar by the compressor 270 and is then guided through the thermal energy storage and recovery device 110 where it is heated up and leaves the thermal energy storage and recovery device 110 at around 550°C.

It is mentioned that the described energy discharge can be done by first "emptying" the mechanical energy stored in the pressure storage vessel 140 and then using the heat transfer fluid being guided through the cold storage device 180, vice versa or a combination where the gaseous heat transfer fluid from the pressure storage vessel 140 is blended with the gaseous heat transfer fluid from the compressor 270.

The energy storage and recovery system 200 is in a preferred embodiment of the invention configured to operate in such a manner that the pressure storage vessel 140 is used for short term storage (minutes to hours) and that the heat transfer fluid provided by cold storage device 180 via the compressor 270 is used for long term storage (several hours / days).

It is hereby possible to use the described system 200 for energy storage during periods of excess power for instance when large machinery is disconnected from the utility grid and to support the utility grid by adding energy to the grid during peak periods for instance in the morning where large machinery is connected or when people go to heat water for tea during breaks in TV.

It is mentioned that in a further embodiment of the invention there is no cold storage device. Such a configuration is suitable in particular for a energy storage and recovery system where a short term energy storage and a utility grid supports is needed.

The energy storage and recovery systems described in this document provide in particular the following advantages:
(A) For realizing an efficient energy storage procedure no underground cavern is needed.
(B) Compared to known energy storage systems having no pressure storage vessel the size of the cold storage device can be reduced since a part of the energy is stored as compression energy in the described pressure storage vessel 140.
(C) The energy storage is suitable for both short term storage and long term storage. It is hereby possible to optimize the size of the storage system depending on the situation on the utility grid.
(D) The present invention can be used for fast grid support during peak period like in the mornings where machinery is started up or during TV shows where people heat water during breaks and where there is a particularly high demand for electrical power.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. An energy storage and recovery system comprising
a thermal energy storage and recovery device (110) having a container (112), a heat storage material being accommodated within the container (112), a first fluid terminal (116) and a second fluid terminal (117), wherein a heat transfer fluid is guidable between the first fluid terminal (116) and the second fluid terminal (117) whereby a heat transfer between the heat transfer fluid and the heat storage material occurs,
a first fluid energy machine (160, 260) being connected with the first fluid terminal (116),
a pressure affecting device (170, 270) being connected with the second fluid terminal (117), and
a pressure storage vessel (140) being connected both with the second fluid terminal (117) and with the pressure affecting device (170, 270),
wherein the first fluid energy machine (160, 260) and the pressure affecting device (170, 270) are configured such that
(a) in a first operational mode the first fluid energy machine (160, 260) generates thermal energy being transferred via the heat transfer fluid at least partially to the heat storage material and
(b) in a second operational mode the first fluid energy machine (160, 260) receives via the heat transfer fluid thermal energy from the heat storage material.

2. The energy storage and recovery system as set forth in the preceding claim, further comprising
a fluid distribution device (142) being connected with the second fluid terminal (117), the pressure storage vessel (140) and the pressure affecting device (170, 270), wherein the fluid distribution device (142) is configured for controlling the strengths of
- a first flow of heat transfer fluid between the second fluid terminal (117) and the fluid distribution device (142),
- a second flow of heat transfer fluid between the pressure storage vessel (140) and the fluid distribution device (142), and
- a third flow of heat transfer fluid between the pressure affecting device (170, 270) and the fluid distribution device (142) .

3. The energy storage and recovery system as set forth in the preceding claim, wherein
(a) in the first operational mode the fluid distribution device (142) is configured for distributing a flow of heat transfer fluid being received from the second fluid terminal (117) into
a first partial flow of heat transfer fluid to the pressure affecting device (170, 270) and
a second partial flow of heat transfer fluid to the pressure storage vessel (140) and
(b) in the second operational mode the fluid distribution device (142) is configured for distributing a further flow of heat transfer fluid being received from the pressure affecting device (170, 270) into
a further first partial flow of heat transfer fluid to the second fluid terminal (117) and
a further second flow partial flow of heat transfer fluid to the pressure storage vessel (140).

4. The energy storage and recovery system as set forth in any one of the preceding claims, wherein
the pressure affecting device is a second fluid energy machine (170, 270), wherein
(a) in the first operational mode the second fluid energy machine (170, 270) receives via the heat transfer fluid thermal energy from the heat storage material, wherein the thermal energy generated by the first fluid energy machine (160, 260) is larger than the thermal energy received by the second fluid energy machine (170, 270), and/or
(b) in the second operational mode the second fluid energy machine (170, 270) receives mechanical energy and the first fluid energy machine (160, 260) generates mechanical energy, wherein the received mechanical energy is smaller than the generated mechanical energy.

5. The energy storage and recovery system as set forth in the preceding claim, wherein
(a) in the first operational mode the first fluid energy machine is configured to act as a compressor (160) and the second fluid energy machine is configured to act as an expander (170) and/or (b) in the second operational mode the first fluid energy machine is configured to act as an expander (270) and the second fluid energy machine is configured to act as a compressor (260).

6. The energy storage and recovery system as set forth in the preceding claim 5, wherein
the first fluid energy machine (160, 260) comprises a first compressor machine and a first expander machine, wherein
- in the first operational mode the first compressor machine is activated and the first expander machine is deactivated
and
- in the second operational mode the first compressor machine is deactivated and the first expander machine is activated and/or wherein
the second fluid energy machine (170, 270) comprises a second expander machine and a second compressor machine, wherein
- in the first operational mode the second expander machine is activated and the second compressor machine is deactivated
and
- in the second operational mode the second expander machine is deactivated and the second compressor machine is activated.

7. The energy storage and recovery system as set forth in the preceding claim 5, wherein
a flow direction of heat transfer fluid through the first fluid energy machine (260) in the second operational mode is opposite to the flow direction of heat transfer fluid through the first fluid energy machine (160) in the first operational mode and/or
a flow direction of heat transfer fluid through the second fluid energy machine (270) in the second operational mode is opposite to the flow direction of heat transfer fluid through the second fluid energy machine (170) in the first operational mode.

8. The energy storage and recovery system as set forth in the preceding claim 4, wherein
the entirety of the first fluid energy machine and the second fluid energy machine comprises a compressor and an expander, wherein
- in the first operational mode (a) a fluid outlet of the compressor is connected with the first fluid terminal and (b) both the second fluid terminal and the pressure storage vessel are connected with a fluid inlet of the expander and
- in the second operational mode (a) the first fluid terminal is connected with the fluid inlet of the expander and (b) the fluid outlet of the compressor is connected with both the second fluid terminal and the pressure storage vessel.

9. The energy storage and recovery system as set forth in any one of the preceding claims, further comprising
a cold storage device (180) having a first fluid port (181) for inserting heat transfer fluid into the cold storage device (180) and a second fluid port (182) for extracting heat transfer fluid from the cold storage device (180), wherein the first fluid port (181) is connected with the pressure affecting device (170, 270) and the second fluid port (182) is connected with the first fluid energy machine (160, 260).

10. The energy storage and recovery system as set forth in any one of the preceding claims, wherein
in the first operational mode the pressure affecting device (170) is configured for producing cold when expanding the heat transfer fluid, wherein the produced cold is useable for cooling purposes.

11. The energy storage and recovery system as set forth in any one of the preceding claims, wherein
the heat storage material comprises rock material and/or sand material.

12. The energy storage and recovery system as set forth in any one of the preceding claims, wherein
the heat transfer fluid is a gas, in particular air.

13. The energy storage and recovery system as set forth in any one of the preceding claims, further comprising
an electric motor (192) for driving the first fluid energy machine (160) in the first operational mode, when the first fluid energy machine (160) is used for receiving mechanical energy in order to compress the heat transfer fluid, and/or
an electric generator (294) for extracting mechanical energy from the first fluid energy machine (260) in the second operational mode, wherein the first fluid energy machine (260) is driven by heat transfer fluid, which expands during the passage through the first fluid energy machine (260) .

14. A method for storing energy within an energy storage and recovery system (100) as set forth in any one of the preceding claims 1 to 13, the method comprising
compressing a heat transfer fluid by the first fluid energy machine (160) such that the heat transfer fluid is heated up,
transferring the compressed and heated up heat transfer fluid from the first fluid energy machine (160) to the thermal energy storage and recovery device (110),
guiding the transferred compressed and heated up heat transfer fluid through the thermal energy storage and recovery device (110) whereby thermal energy is transferred from the heat transfer fluid to the heat storage material such that the heat transfer fluid is cooled down,
transferring from the thermal energy storage and recovery device (110) a first part of the cooled down heat transfer fluid to the pressure affecting device (170) and a second part of the cooled down heat transfer fluid to the pressure storage vessel (140), and
if the first part is larger than zero, expanding heat transfer fluid, which has been transferred to the pressure affecting device (170), by the pressure affecting device (170) .

15. A method for recovering energy from an energy storage and recovery system (200) as set forth in any one of the preceding claims 1 to 13, the method comprising
compressing a heat transfer fluid by the pressure affecting device (270),
transferring from the pressure affecting device (270) the compressed heat transfer fluid to the thermal energy storage and recovery device (110),
transferring from the pressure storage vessel (140) additional compressed heat transfer fluid to the thermal energy storage and recovery device (110),
guiding the transferred compressed heat transfer fluid as well as the additional compressed heat transfer fluid through the thermal energy storage and recovery device (110) whereby thermal energy is transferred from the heat storage material to the heat transfer fluid such that the heat transfer fluid is heated up,
transferring the heated up heat transfer fluid from the thermal energy storage and recovery device (110) to the first fluid energy machine (260), and
expanding the transferred heated up heat transfer medium by the first fluid energy machine (260) such that mechanical energy is generated and the heat transfer medium is cooled down.
